# FASCICULE DE BREVET EUROPEEN

(11) **EP 4 423 368 B1**
(45) Date de publication et mention de la délivrance du brevet: **02.04.2025**
(21) Numéro de dépôt: 23790699.5
(22) Date de dépôt: 20.10.2023
(51) Int. Cl.: F01D 25/16, F02C 6/12, F01D 15/10

(54) **ASSEMBLAGE POUR TURBOGÉNÉRATEUR**
TURBINENGENERATORANORDNUNG
TURBINE GENERATOR ASSEMBLY

(30) Priorité: 21.10.2022 BE 202205849
(43) Date de publication de la demande: 04.09.2024
(73) Titulaire: Mitis, 4280 Hannut (BE)
(72) Inventeur: DELANAYE, Michel, 4280 Hannut (BE); TENEY, Jean-Michel, 4020 Liège (BE)
(74) Mandataire: Gevers Patents
(86) Numéro de dépôt international: PCT/EP2023/079372
(87) Numéro de publication internationale: WO 2024/084087

(56) Documents cités:
- DE-A1- 102014 210 451
- DE-U1- 202006 004 975
- US-A1- 2003 223 892
- US-B1- 6 305 169

## Description

### Domaine technique

La présente invention concerne un assemblage qui forme une partie d'un turbogénérateur et est destiné à être utilisé dans un appareil de production d'électricité ou de cogénération d'énergie.

### Art antérieur

Des appareils de production d'électricité ou de cogénération d'énergie connus comportent un dispositif de combustion alimentant en gaz de combustion une turbine couplée mécaniquement à un compresseur compressant de l'air injecté dans le dispositif de combustion. Un tel appareil est par exemple décrit dans le document WO2022089822A1.

Le couplage mécanique entre la turbine et le compresseur passe par un élément central, supporté en rotation par des paliers radiaux. Les documents US 6,305,169 B1, US 2003/223892 A1 et DE 20 2006 004 975 U1 divulguent de tels couplages mécaniques. Le positionnement adéquat de ces paliers est essentiel afin d'obtenir une excellente stabilité, en particulier à haute vitesse de rotation.

### Exposé de l'invention

Un des buts de l'invention est de fournir un assemblage pour turbogénérateur pour appareil de production d'électricité ou de cogénération d'énergie comprenant une turbine et un compresseur qui soit particulièrement stable mécaniquement. A cet effet, l'invention propose un assemblage pour turbogénérateur comprenant :
- une turbine configurée pour être alimentée en gaz de combustion par un dispositif de combustion ;
- un compresseur couplé mécaniquement à la turbine par un élément central ;
- un moteur-générateur décalé axialement du compresseur et couplé mécaniquement à la turbine et au compresseur par l'élément central ;
- un premier palier radial situé, axialement, entre la turbine et le compresseur et prévu pour guider en rotation l'élément central ; et
- un deuxième palier radial, situé, axialement, entre le compresseur et le moteur-générateur, et prévu pour guider en rotation l'élément central.

Le premier palier radial est le seul palier radial entre la turbine et le compresseur.

Dans l'assemblage pour turbogénérateur selon l'invention, les paliers radiaux sont situés, axialement, de part et d'autre du compresseur : le premier palier est situé entre la turbine et le compresseur, et le deuxième palier est situé entre le compresseur et le moteur-générateur. Une telle répartition des paliers radiaux permet de reprendre les moments de force de façon particulièrement efficace car ces couples proviennent des masses de la turbine, du compresseur et du rotor du moteur-générateur (ce dernier étant particulièrement lourd). Par conséquent, il permet de limiter le nombre de paliers radiaux.

Comme le premier palier radial est le seul palier radial entre la turbine et le compresseur, il n'y a pas d'autre palier radial que le premier palier radial entre la turbine et le compresseur. Cela permet de diminuer la distance entre la turbine et le compresseur, et donc d'améliorer la stabilité du système.

Par ailleurs, la position du deuxième palier, de l'autre côté du compresseur par rapport à la turbine, permet de diminuer la distance entre la turbine et le compresseur, de ventiler mieux la région entre la turbine et le compresseur qui est très chaude, et donc d'améliorer la stabilité du système.

Le système est prévu pour tourner préférentiellement à une vitesse d'au moins 80.000 tours par minute, plus préférentiellement au moins 100.000 tours par minute. Il peut par exemple être prévu pour tourner à une vitesse entre 90.000 et 150.000 tours par minute.

Tel qu'il est connu d'un homme du métier, le « moteur-générateur » fonctionne en moteur lorsqu'il est alimenté en énergie électrique et fournit de l'énergie sous forme de mouvement, et en générateur lorsqu'il est alimenté en énergie sous forme de mouvement et fournit de l'énergie électrique. De façon alternative, le terme « moteur-générateur » peut être substitué dans ce document par « moteur et/ou générateur ». Le moteur-générateur est un moteur-générateur électrique comprenant un rotor et un stator. Le rotor du moteur-générateur est formé d'une partie de l'élément central sur laquelle un dispositif magnétique rotorique est fixé. Le dispositif magnétique rotorique comprend un ou plusieurs aimants, de préférence permanents.

Dans le cadre du présent document, un palier « radial » est un palier empêchant un mouvement perpendiculaire à l'axe de rotation, et un palier « axial » est un palier empêchant un mouvement parallèle à l'axe de rotation. Les paliers radiaux peuvent être séparés, radialement, de l'élément central par un autre élément en rotation et fixé à l'élément central.

Dans le cadre du présent document, un palier radial est un palier aérodynamique. Ainsi, lors de la rotation, l'élément central est en lévitation, séparé du palier par une couche d'air qui supporte le palier par un effet de portance. Ce n'est pas un palier à roulement. Il ne nécessite pas de lubrification.

Selon un mode de réalisation, l'assemblage pour turbogénérateur comprend une canalisation d'air débouchant sur le compresseur, la canalisation d'air étant située entre le compresseur et le deuxième palier radial et ayant une composante radiale.

En effet, au lieu d'une canalisation d'air axiale située entre le rotor et le stator, il est préféré que la canalisation d'air soit entre le deuxième palier radial et le compresseur et ne soit pas parallèle à l'axe (autrement dit qu'elle ait une composante radiale). Cela permet que la distance entre le rotor et le stator soit particulièrement petite, ce qui améliore le stabilité électro-magnéto-mécanique du système et réduit la puissance réactive, tout en améliorant le déphasage angulaire (cosinus ϕ). La canalisation d'air peut comprendre un ou plusieurs virages, comprendre une section radiale et/ou comprendre une volute d'entrée qui prend l'air sur le côté, et lui fait faire une spirale avec un angle spécifique.

Selon un mode de réalisation, le premier palier radial et le deuxième palier radial sont des paliers à feuille.

Les paliers à feuille permettent d'utiliser un élément central de diamètre plus grand que ne le permettraient d'autres paliers, par exemple des paliers à billes. Cela permet d'augmenter la première fréquence propre de flexion, ce qui améliore la stabilité et l'opération à haute vitesse.

Selon un mode de réalisation, l'élément central est fait d'une seule pièce ou d'une pluralité de pièces fixées ensemble de façon à tourner de façon intégrale.

L'élément central, qui s'étend de la turbine au moteur-générateur en passant par le compresseur, a donc une vitesse de rotation qui est identique sur toute son étendue. Un élément central d'une pièce ou fait de pièces fixées de façon intégrale simplifie la procédure d'équilibrage, qui est particulièrement délicate dans un assemblage pour turbogénérateur tel que celui de l'invention.

Selon un mode de réalisation, le premier palier radial et le deuxième palier radial sont les seuls paliers radiaux.

Il n'y a donc pas d'autre palier radial, ni au-delà du moteur-générateur par rapport au compresseur, ni entre le moteur-générateur et la turbine, ni au-delà de la turbine par rapport au compresseur. L'assemblage pour turbogénérateur selon l'invention tournant particulièrement vite, la question de la concentricité est importante. Or, plus le nombre de paliers est faible, plus il est facile qu'ils soient tous concentriques. Avoir deux paliers est un compromis intéressant entre les contraintes de stabilité et de concentricité.

Selon un mode de réalisation, l'assemblage pour turbogénérateur comprend une butée et un palier axial configurés pour empêcher un mouvement axial de la butée.

La butée, qui peut être appelée butée axiale, est de préférence située entre la turbine et le compresseur. Elle est fixée, directement ou indirectement, à l'élément central.

Selon un mode de réalisation, l'assemblage pour turbogénérateur comprend un arbre fixé à l'élément central de façon détachable et de façon à ce que l'arbre et l'élément central tournent ensemble, la butée faisant partie de l'arbre. L'arbre pourrait aussi être appelé « élément rotatif ». La présence de l'arbre, formant une pièce distincte de l'élément central, permet de pouvoir enfiler les paliers radiaux, le compresseur et la turbine sur l'élément central.

Selon un mode de réalisation, le moteur-générateur comprend un rotor fixé à l'élément central et comprenant un dispositif magnétique rotorique bipole, de préférence à aimant(s) permanent(s).

Autrement dit, le dispositif magnétique rotorique ne comporte qu'un seul pôle sud et un seul pôle nord. Vu la vitesse de rotation très élevée, le système est ainsi plus facile à redresser qu'avec un quadrupôle ou avec encore plus de pôles magnétiques. Cela peut être un seul aimant permanent.

Selon un mode de réalisation, le moteur-générateur comprend un rotor fixé à l'élément central et comprenant un dispositif magnétique rotorique situé à l'intérieur de l'élément central.

Cela permet que le dispositif magnétique rotorique, qui est particulièrement lourd, soit proche de l'axe. Il est cependant possible, tout en restant dans le cadre de l'invention, que le dispositif magnétique rotorique soit fixé à l'extérieur de l'élément central, par exemple fretté sur l'élément central.

Selon un mode de réalisation, l'élément central comprend une cavité ayant une ouverture dans un plan radial et située à une extrémité de l'élément central, le dispositif magnétique rotorique étant situé dans la cavité.

L'ouverture permet d'introduire le dispositif magnétique rotorique dans l'élément central en le centrant de façon particulièrement précise.

Selon un mode de réalisation, l'assemblage pour turbogénérateur comprend un détecteur de position angulaire de l'élément central, qui comprend :
- une cible fixée à une extrémité de l'élément central, et
- un capteur inductif fixe par rapport à un stator du moteur-générateur.

Le détecteur de position angulaire permet aussi de déterminer la vitesse de rotation de l'élément central. Le capteur inductif est préférentiellement aligné sur l'axe, en face de la cible. Il est de préférence connecté à un dispositif électronique supporté par un boitier en forme d'ogive.

L'homme du métier comprendra aisément que les considérations dans ce document relatives au détecteur de position angulaire dépassent le cadre strict de l'invention telle qu'elle est revendiquée et pourraient faire l'objet d'une invention à part entière, en particulier dans le cadre général d'un assemblage pour turbogénérateur muni d'une turbine, d'un compresseur et d'un moteur-générateur ou générateur tels que susdits, y compris dans le cas où les parliers radiaux seraient absents ou en nombre différent et/ou disposés d'une façon autre que celle décrite dans le présent document.

Selon un mode de réalisation, la cible est constituée d'une surface isolante et d'un élément radial métallique.

L'élément radial métallique est le point de repère du capteur inductif.

Selon un mode de réalisation, l'élément central a un diamètre supérieur à 15 mm et inférieur à 40 mm.

Le diamètre de l'élément central peut varier en fonction de la position le long de l'axe, mais, de préférence, il n'est nulle part inférieur à 15 mm ou supérieur à 40 mm. Un faible diamètre permet de réduire la valeur de la première fréquence propre de flexion, ce qui détériore la stabilité et l'opération à haute vitesse. Un grand diamètre diminue l'efficacité de l'assemblage pour turbogénérateur. L'intervalle revendiqué permet un compromis entre ces deux contraintes.

L'invention propose aussi un appareil de production d'électricité ou de cogénération d'énergie comprenant un assemblage pour turbogénérateur selon l'invention. De préférence, les seuls paliers radiaux sont le premier palier radial et le deuxième palier radial.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 schématise un appareil de production d'électricité ou de cogénération d'énergie ;
- la figure 2 est une coupe axiale d'une partie d'un assemblage pour turbogénérateur,
- la figure 3 est une coupe axiale d'une partie d'un autre assemblage pour turbogénérateur,
- la figure 4 est une coupe axiale de l'assemblage pour turbogénérateur partiellement illustré figure 2, et
- la figure 5 est une vue de face d'une cible.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Sur les figures, les éléments identiques ou analogues peuvent porter les mêmes références. Les numéros de référence dans les revendications ne limitent pas leur portée.

Dans ce document, les termes « premier » et « deuxième » servent à différencier les différents éléments et n'impliquent pas d'ordre entre ces éléments. Dans ce document, l'usage des verbes « comprendre », « inclure », « comporter », ou toute autre variante, ainsi que leurs conjugaisons, ne peut exclure la présence d'éléments autres que ceux mentionnés. De façon semblable, dans ce document, l'usage d'un article indéfini « un », « une », et/ou d'un article défini « le », « la » ou « l' », pour introduire un élément qui n'exclut pas la présence d'une pluralité de ces éléments.

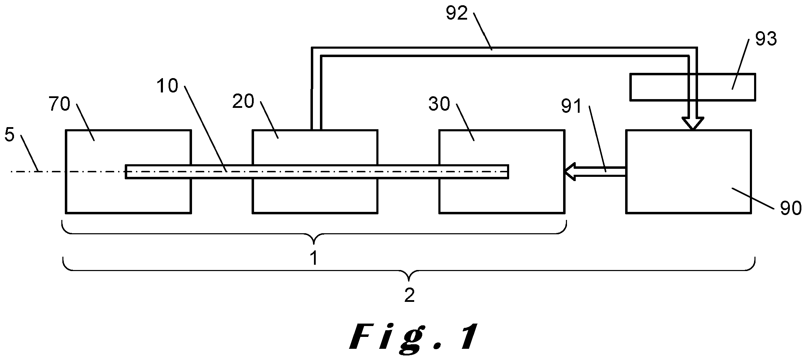

La figure 1 illustre schématiquement différents éléments d'un appareil de production d'électricité ou de cogénération d'énergie 2. L'appareil 2 comprend un dispositif de combustion 90, une turbine 30, un compresseur 20 et un moteur-générateur 70. Le dispositif de combustion 90 transmet des gaz de combustion, (c'est-à-dire résultant de la combustion) à la turbine 30 via un premier conduit 91. La turbine 30, le compresseur 20 et le moteur-générateur 70 sont couplés mécaniquement via un élément central 10. L'air comprimé par le compresseur 20 est envoyé au dispositif de combustion 90 via un deuxième conduit 92 et un récupérateur 93 qui préchauffe l'air comprimé avant injection dans le dispositif de combustion 90. Le compresseur 20 est préférentiellement fretté sur l'élément central 10.

Dans le cadre du présent document un assemblage pour turbogénérateur 1 comprend la turbine 30, la compresseur 20, le moteur-générateur 70 et l'élément central 10 qui sont alignés pour tourner autour de l'axe 5. Il est connecté au dispositif de combustion 90. La turbine 30, la compresseur 20, le moteur-générateur 70 sont disposés, axialement, dans l'ordre suivant : turbine 30, compresseur 20, moteur-générateur 70, de façon à être distants axialement l'un de l'autre.

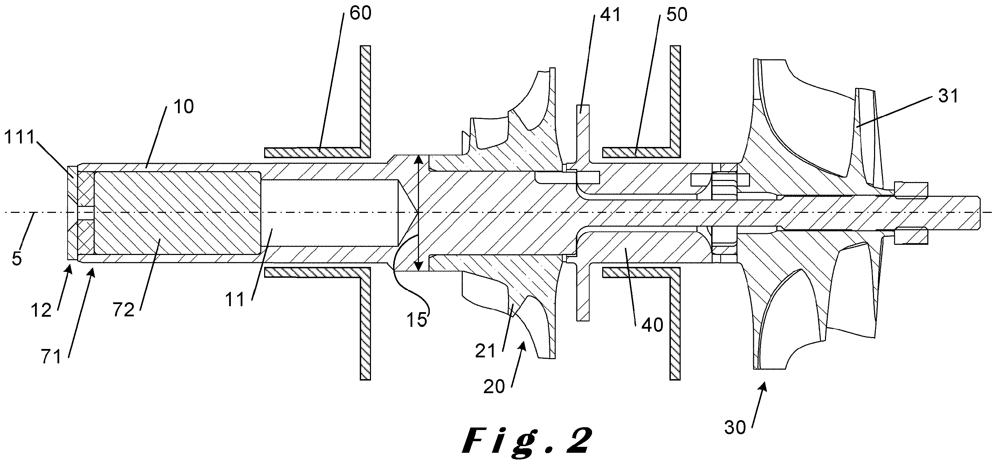

La figure 2 illustre certaines parties d'un assemblage pour turbogénérateur 1. On y voit notamment les pales 31 de la turbine 30, les pales 21 du compresseur 20, et un dispositif magnétique rotorique 72 du rotor 71 du moteur-générateur 70.

La turbine 30 et le compresseur 20 sont séparés, axialement, par un premier palier radial 50, qui entoure, radialement, l'élément central 10. Le premier palier radial 50 est, préférentiellement, le seul palier radial entre la turbine 30 et le compresseur 20.

Le compresseur 20 et le moteur-générateur 70 sont séparés, axialement, par un deuxième palier radial 60, qui entoure, radialement, l'élément central 10. En particulier, le deuxième palier radial 60 sépare, axialement, le compresseur du dispositif magnétique rotorique 72. Le deuxième palier radial 60 est, préférentiellement, le seul palier radial entre le compresseur 20 et le moteur-générateur 70.

Le premier palier radial 50 et le deuxième palier radial 60 sont préférentiellement des paliers à feuille. Le premier palier radial 50 et le deuxième palier radial 60 sont préférentiellement les seuls paliers radiaux de l'assemblage pour turbogénérateur 1 et de l'appareil de production d'électricité ou de cogénération d'énergie 2.

De préférence, l'élément central 10 est fait d'une seule pièce ou d'une pluralité de pièces fixées ensemble de façon à tourner toutes à la même vitesse angulaire, comme si elles étaient d'une pièce.

De préférence, le diamètre radial 15 de l'élément central, quelle que soit la position de le long de l'axe 5, est supérieur à 15 mm et/ou est inférieur à 40 mm.

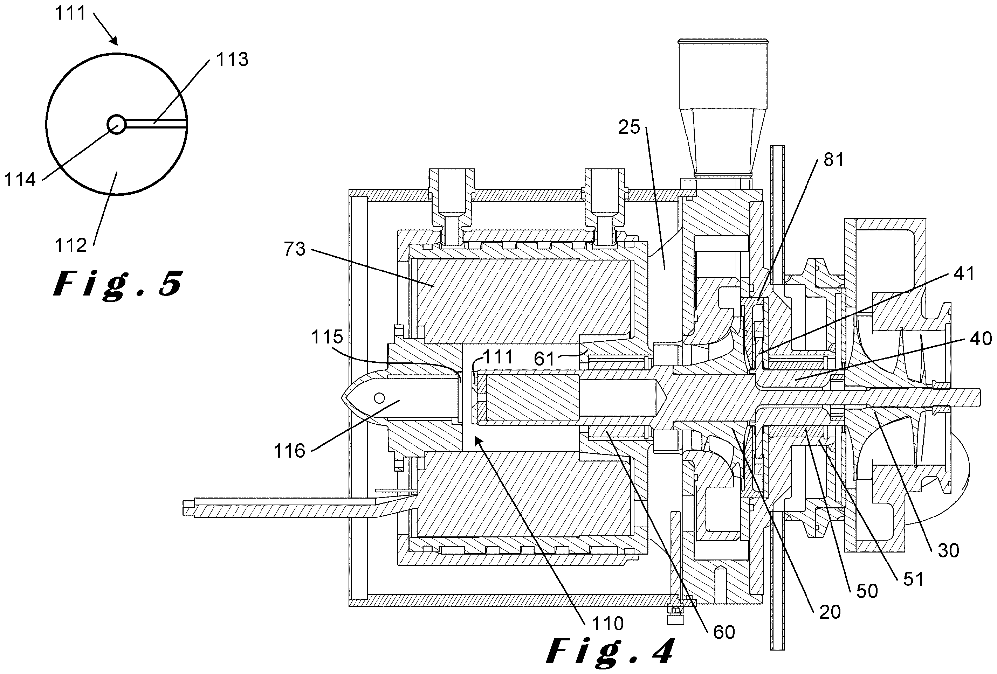

De préférence, l'élément central 10 est fixé à un arbre 40 qui l'entoure radialement, et le premier palier radial 50 entoure l'arbre 40 radialement. L'arbre 40 est situé, axialement, entre la turbine 30 et le compresseur 20. L'arbre 40 comprend une butée 41 axiale maintenue par un palier axial 81 (visible Figure 4). La butée 41 est telle que le diamètre 15 de l'élément central 10, en tout point, est plus petit que le diamètre de la butée 41.

Le dispositif magnétique rotorique 72 est préférentiellement un bipole, par exemple un aimant. Dans le mode de réalisation de la figure 2, il est situé dans une cavité 11 à l'intérieur de l'élément central 10. La cavité 11 comprend, de préférence, une ouverture débouchant axialement sur l'extrémité 12 de l'élément central 10.

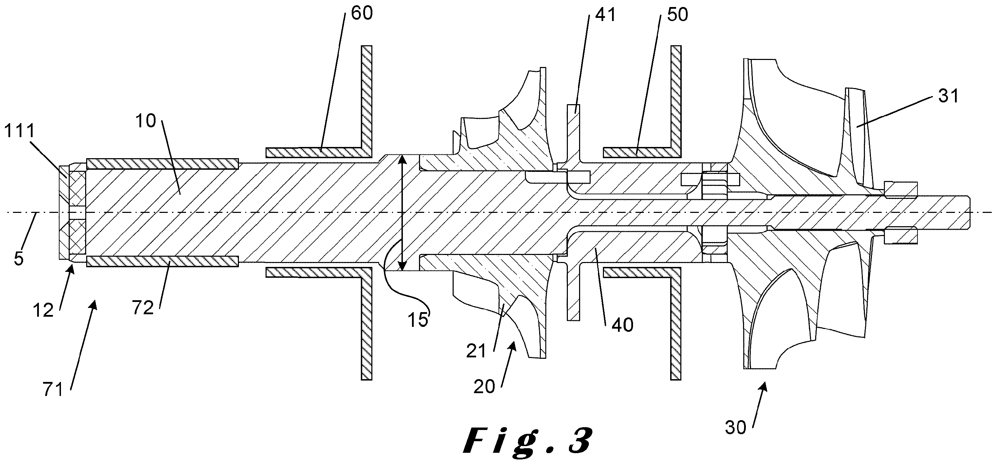

Dans le mode de réalisation de la figure 3, le dispositif magnétique rotorique 72 est fixé à l'extérieur de l'élément central 10, de façon à l'entourer radialement.

Les figures 2 et 3 illustrent en outre une cible 111 qui sera décrite plus en détail en référence aux figures 4 et 5.

La figure 4 illustre certaines parties d'un assemblage pour turbogénérateur 1. L'assemblage pour turbogénérateur 1 comprend une canalisation d'air 25 amenant de l'air au compresseur 20. La canalisation d'air 25 est préférentiellement située entre le compresseur 20 et le deuxième palier radial 60. Elle a une composante radiale, c'est-à-dire que le trajet de l'air dans cette canalisation d'air 25 n'est pas uniquement axial.

L'assemblage pour turbogénérateur 1 comprend préférentiellement un premier support palier 51 autour du premier palier radial 50 et un deuxième support palier 61 autour du deuxième palier radial 60. Le premier 51 et le deuxième 61 supports paliers sont fixes l'un par rapport à l'autre et sont concentriques. Le premier 51 et le deuxième 61 supports paliers sont fixes par rapport à un stator 73 du moteur-générateur 70.

L'assemblage pour turbogénérateur 1 comprend préférentiellement un détecteur 110 permet de déterminer la position angulaire de l'élément central 10 et préférentiellement la vitesse angulaire de l'élément central 10. Le détecteur 110 comprend une cible 111 fixée à l'extrémité 12 de l'élément central 10 dans un plan radial. Elle tourne avec l'élément central 10 tout en restant dans le même plan. Le détecteur 110 comprend aussi un capteur inductif 115 aligné axialement sur la cible 111, et fixe par rapport au stator 73 du moteur-générateur 70. Il est connecté à un dispositif électronique comprenant une carte d'acquisition de vitesse et/ou de position angulaires qui est supportée par un boitier 116 en forme d'ogive. Sur base de la mesure de position angulaire et/ou de la vitesse angulaire, le dispositif électronique permet de réaliser un contrôle et/ou une surveillance de l'assemblage pour turbogénérateur 1 lors de son fonctionnement, ce qui permet d'éviter son décrochage.

La figure 5 illustre la cible 111 dans un mode de réalisation de l'invention. Elle est constituée d'une surface isolante 112 et d'un élément radial métallique 113. Elle est préférentiellement percée d'un trou 114 axial.

En résumé, l'invention se rapporte à un assemblage pour turbogénérateur 1 pour un appareil de production d'électricité ou de cogénération d'énergie. L'assemblage pour turbogénérateur 1 comprend, alignés axialement et dans cet ordre : une turbine 30, un premier palier radial 50, un compresseur 20, un deuxième palier radial 60, et un moteur-générateur 70.

La présente invention a été décrite en relation avec des modes de réalisations spécifiques, qui ont une valeur purement illustrative et ne doivent pas être considérés comme limitatifs. Il apparaîtra directement pour l'homme du métier que l'invention n'est pas limitée aux exemples illustrés ou décrits ci-dessus, et que sa portée est plus largement définie par les revendications ci-après introduites.

## Revendications

1. Assemblage pour turbogénérateur (1) comprenant :
• une turbine (30) configurée pour être alimentée en gaz de combustion par un dispositif de combustion (90) ;
• un compresseur (20) couplé mécaniquement à la turbine (30) par un élément central (10) ;
• un moteur-générateur (70) décalé axialement du compresseur (20) et couplé mécaniquement à la turbine (30) et au compresseur (20) par l'élément central (10) ;
• un premier palier radial (50) situé, axialement, entre la turbine (30) et le compresseur (20) et prévu pour guider en rotation l'élément central (10) ; et
• un deuxième palier radial (60), situé, axialement, entre le compresseur (20) et le moteur-générateur (70), et prévu pour guider en rotation l'élément central (10) ;
**caractérisé en ce que** le premier palier radial (50) est le seul palier radial entre la turbine (30) et le compresseur (20).

2. Assemblage pour turbogénérateur selon la revendication 1, comprenant une canalisation d'air (25) débouchant sur le compresseur (20), la canalisation d'air (25) étant située entre le compresseur (20) et le deuxième palier radial (60) et ayant une composante radiale.

3. Assemblage pour turbogénérateur selon l'une quelconque des revendications précédentes, dans lequel le premier palier radial (50) et le deuxième palier radial (60) sont des paliers à feuille.

4. Assemblage pour turbogénérateur selon l'une quelconque des revendications précédentes, dans lequel l'élément central (10) est fait d'une seule pièce ou d'une pluralité de pièces fixées ensemble de façon à tourner de façon intégrale.

5. Assemblage pour turbogénérateur selon l'une quelconque des revendications précédentes, dans lequel le premier palier radial (50) et le deuxième palier radial (60) sont les seuls paliers radiaux.

6. Assemblage pour turbogénérateur selon l'une quelconque des revendications précédentes, comprenant une butée (41) et un palier axial (81) configurés pour empêcher un mouvement axial de la butée (41).

7. Assemblage pour turbogénérateur selon la revendication 6, comprenant un arbre (40) fixé à l'élément central (10) de façon détachable et de façon à ce que l'arbre (40) et l'élément central (10) tournent ensemble, la butée (41) faisant partie de l'arbre (40).

8. Assemblage pour turbogénérateur selon l'une quelconque des revendications précédentes, dans lequel le moteur-générateur (70) comprend un rotor (71) fixé à l'élément central (10) et comprenant un dispositif magnétique rotorique (72) bipole.

9. Assemblage pour turbogénérateur selon l'une quelconque des revendications précédentes, dans lequel le moteur-générateur (70) comprend un rotor (71) fixé à l'élément central (10) et comprenant un dispositif magnétique rotorique (72) situé à l'intérieur de l'élément central (10).

10. Assemblage pour turbogénérateur selon la revendication 9, dans lequel l'élément central (10) comprend une cavité (11) ayant une ouverture dans un plan radial et située à une extrémité (12) de l'élément central (10), le dispositif magnétique rotorique (72) étant situé dans la cavité (11).

11. Assemblage pour turbogénérateur selon l'une quelconque des revendications précédentes, comprenant un détecteur de position angulaire (110) de l'élément central (10), qui comprend :
• une cible (111) fixée à une extrémité (12) de l'élément central (10), et
• un capteur inductif (115) fixe par rapport à un stator (73) du moteur-générateur (70).

12. Assemblage pour turbogénérateur selon la revendication 11, dans lequel la cible (111) est constituée d'une surface isolante (112) et d'un élément radial métallique (113).

13. Assemblage pour turbogénérateur selon l'une quelconque des revendications précédentes, dans lequel l'élément central (10) a un diamètre (15) supérieur à 15 mm et inférieur à 40 mm.

14. Appareil de production d'électricité ou de cogénération d'énergie (2) comprenant un assemblage pour turbogénérateur (1) selon l'une quelconque des revendications précédentes.

## Patentansprüche

1. Turbogeneratoranordnung (1), umfassend:
- eine Turbine (30), die konfiguriert ist, um von einer Verbrennungsvorrichtung (90) mit Verbrennungsgas versorgt zu werden;
- einen Kompressor (20), der über ein mittleres Element (10) mechanisch mit der Turbine (30) verbunden ist;
- einen Motor-Generator (70), der axial von dem Kompressor (20) versetzt ist und mechanisch über das mittlere Element (10) mit der Turbine (30) und dem Kompressor (20) verbunden ist;
- ein erstes radiales Lager (50), das axial zwischen der Turbine (30) und dem Kompressor (20) gelegen ist und dazu vorgesehen ist, das mittlere Element (10) drehend zu führen; und
- ein zweites radiales Lager (60), das axial zwischen dem Kompressor (20) und dem Motor-Generator (70) gelegen ist und dazu vorgesehen ist, das mittlere Element (10) drehend zu führen;
**dadurch gekennzeichnet, dass** das erste radiale Lager (50) das einzige radiale Lager zwischen der Turbine (30) und dem Kompressor (20) ist.

2. Turbogeneratoranordnung nach Anspruch 1, umfassend einen Luftkanal (25), der zum Kompressor (20) führt, wobei der Luftkanal (25) zwischen dem Kompressor (20) und dem zweiten radialen Lager (60) gelegen ist und eine radiale Komponente aufweist.

3. Turbogeneratoranordnung nach einem der vorstehenden Ansprüche, wobei das erste radiale Lager (50) und das zweite radiale Lager (60) Folienlager sind.

4. Turbogeneratoranordnung nach einem der vorstehenden Ansprüche, wobei das mittlere Element (10) aus einem einzigen Werkstück oder einer Vielzahl von Werkstücken hergestellt ist, die so aneinander befestigt sind, dass sie sich integral drehen.

5. Turbogeneratoranordnung nach einem der vorstehenden Ansprüche, wobei das erste radiale Lager (50) und das zweite radiale Lager (60) die einzigen radialen Lager sind.

6. Turbogeneratoranordnung nach einem der vorstehenden Ansprüche, umfassend einen Anschlag (41) und ein axiales Lager (81), die konfiguriert sind, um eine axiale Bewegung des Anschlags (41) zu verhindern.

7. Turbogeneratoranordnung nach Anspruch 6, umfassend eine Welle (40), die auf abnehmbare Weise am mittleren Element (10) befestigt ist und derart, dass die Welle (40) und das mittlere Element (10) sich gemeinsam drehen, wobei der Anschlag (41) Teil der Welle (40) ist.

8. Turbogeneratoranordnung nach einem der vorstehenden Ansprüche, wobei der Motor-Generator (70) einen Rotor (71) umfasst, der am mittleren Element (10) befestigt ist und eine zweipolige Rotormagnetvorrichtung (72) umfasst.

9. Turbogeneratoranordnung nach einem der vorstehenden Ansprüche, wobei der Motor-Generator (70) einen Rotor (71) umfasst, der am mittleren Element (10) befestigt ist, und eine zweipolige Rotormagnetvorrichtung (72) umfasst, das sich im Inneren des mittleren Elements (10) befindet.

10. Turbogeneratoranordnung nach Anspruch 9, wobei das mittlere Element (10) einen Hohlraum (11) umfasst, der eine Öffnung in einer radialen Ebene aufweist und an einem Ende (12) des mittleren Elements (10) gelegen ist, wobei die Rotormagnetvorrichtung (72) im Hohlraum (11) gelegen ist.

11. Turbogeneratoranordnung nach einem der vorstehenden Ansprüche, umfassend einen Winkelpositionsdetektor (110) des mittleren Elements (10), der Folgendes umfasst:
- ein Ziel (111), das an einem Ende (12) des mittleren Elements (10) befestigt ist, und
- einen induktiven Sensor (115), der in Bezug auf einen Stator (73) des Motor-Generators (70) fest ist.

12. Turbogeneratoranordnung nach Anspruch 11, wobei das Ziel (111) aus einer isolierenden Oberfläche (112) und einem radialen Metallelement (113) besteht.

13. Turbogeneratoranordnung nach einem der vorstehenden Ansprüche, wobei das mittlere Element (10) einen Durchmesser (15) größer als 15 mm und kleiner als 40 mm aufweist.

14. Einrichtung zur Stromerzeugung oder zur Kraft-Wärme-Kopplung (2), umfassend eine Turbogeneratoranordnung (1) nach einem der vorstehenden Ansprüche.

## Claims

1. A turbine generator assembly (1) comprising:
• a turbine (30) configured to be supplied with combustion gases by a combustion device (90);
• a compressor (20) mechanically coupled to the turbine (30) by a central element (10);
• a motor-generator (70) axially offset from the compressor (20) and mechanically coupled to the turbine (30) and the compressor (20) by the central element (10);
• a first radial bearing (50) located axially between the turbine (30) and the compressor (20) and designed to guide the central element (10) in rotation; and
• a second radial bearing (60) located axially between the compressor (20) and the motor-generator (70) and designed to guide the central element (10) in rotation;
**characterised in that** the first radial bearing (50) is the only radial bearing between the turbine (30) and the compressor (20).

2. The turbine generator assembly according to claim 1, comprising an air pipe (25) leading to the compressor (20), the air pipe (25) being located between the compressor (20) and the second radial bearing (60) and having a radial component.

3. The turbine generator assembly according to any one of the preceding claims, wherein the first radial bearing (50) and the second radial bearing (60) are foil bearings.

4. The turbine generator assembly according to any one of the preceding claims, wherein the central element (10) is made of a single piece or of a plurality of pieces attached together so as to rotate integrally.

5. The turbine generator assembly according to any one of the preceding claims, wherein the first radial bearing (50) and the second radial bearing (60) are the only radial bearings.

6. The turbine generator assembly according to any one of the preceding claims, comprising an abutment (41) and an axial bearing (81) configured to prevent axial movement of the abutment (41).

7. The turbine generator assembly according to claim 6, comprising a shaft (40) releasably attached to the central element (10) such that the shaft (40) and central element (10) rotate together, the abutment (41) forming part of the shaft (40).

8. The turbine generator assembly according to any one of the preceding claims, wherein the motor-generator (70) comprises a rotor (71) attached to the central element (10) and comprising a bipolar rotor magnet device (72).

9. The turbine generator assembly according to any one of the preceding claims, wherein the motor-generator (70) comprises a rotor (71) attached to the central element (10) and comprising a rotor magnet device (72) located inside the central element (10).

10. The turbine generator assembly according to claim 9, wherein the central element (10) comprises a cavity (11) having an opening in a radial plane and located at one end (12) of the central element (10), the rotor magnet device (72) being located in the cavity (11).

11. The turbine generator assembly according to any one of the preceding claims, comprising an angular position detector (110) of the central element (10), which comprises:
• a target (111) attached to one end (12) of the central element (10), and
• an inductive sensor (115) stationary relative to a stator (73) of the motor-generator (70).

12. The turbine generator assembly according to claim 11, wherein the target (111) consists of an insulating surface (112) and a metallic radial element (113).

13. The turbine generator assembly according to any one of the preceding claims, wherein the central element (10) has a diameter (15) greater than 15 mm and less than 40 mm.

14. A power generation unit or energy cogeneration unit (2) comprising a turbine generator assembly (1) according to any one of the preceding claims.
